Europäisches Patentamt

European Patent Office

Office européen des brevets

(11) Publication number: **0 122 995**
**B1**

(12) **EUROPEAN PATENT SPECIFICATION**

(45) Date of publication of patent specification: **11.05.88**

(21) Application number: **83305982.7**

(22) Date of filing: **03.10.83**

(51) Int. Cl.⁴: **E 04 C 5/07, E 01 C 7/36, E 01 C 11/16, E 01 C 23/04, E 02 D 3/00, C 09 K 17/00**

(54) **Strengthening a matrix.**

(30) Priority: **05.10.82 GB 8228334**
**31.03.83 GB 8308915**
**03.06.83 GB 8315289**
**28.06.83 GB 8317491**

(43) Date of publication of application:
**31.10.84 Bulletin 84/44**

(45) Publication of the grant of the patent:
**11.05.88 Bulletin 88/19**

(84) Designated Contracting States:
**AT BE CH DE FR IT LI LU NL SE**

(56) References cited:
**EP-A-0 002 267**
**CH-A- 592 219**
**DE-A-1 784 576**
**DE-A-2 434 597**
**DE-A-3 023 002**
**FR-A-2 355 787**
**FR-A-2 451 902**
**GB-A-1 210 354**
**GB-A-2 073 090**

**PLASTICONSTRUCTION, vol. 5, no. 4, July/August 1975, page 165, Carl Hanser Verlag, München, DE. "Rissfester Beton mit PP-Fasernetzeinlage"**

(73) Proprietor: **Mercer, Frank Brian**
**Kenolbri Meins Road**
**Blackburn Lancashire (GB)**

(72) Inventor: **Mercer, Frank Brian**
**Kenolbri Meins Road**
**Blackburn Lancashire (GB)**

(74) Representative: **Lyndon-Stanford, Edward Willoughby Brooke et al**
**MARKS & CLERK 57/60 Lincoln's Inn Fields London WC2A 3LS (GB)**

Courier Press, Leamington Spa, England.

# 0 122 995

## Description

The present invention relates to a method of strengthening a particulate matrix, comprising randomly embedding therein without creating a substantial amount of extra void space, a substantial number of generally flat, flexible, open mesh structure pieces per cubic metre of matrix. The word "strengthening" includes reinforcing and/or stabilizing.

In general terms, the matrix can be any particulate matrix, whether load-bearing or not. The structures formed can be for instance geotechnical structures, structural components for building, or surfacing materials. The matrix can be of any suitable form, such as soil (which includes rocks, stones, gravels, sands, clays and the like as well as cement-stabilized soil and cement-bound granular materials (normally containing 2—12% cement), and mine spoil or slag), substances comprising a hydrocarbon binder such as asphalt, bituminous asphalt or tar, substances comprising a hydraulic binder or fill, such as cement, concrete, lean-mix concrete or plaster (which are considered as particulate), substances comprising a pozzolanic binder, and substances comprising a resinous binder, such as chip-board. The matrix can be particulate and non-cohesive or cohesive, or inherently substantially rigid; a material such as clay or tar may be viscous and capable of large movement or deformation, or a material such as cement or concrete can be rigid and incapable of large movement or deformation. Particulate matrices will have natural void spaces which can be filled for instance with water and/or air.

GB 2 073 090A describes a method of strengthening soils in which long and fairly wide lengths of flexible plastics material mesh structure are embedded in the matrix, the lengths being in parallel layers and the lengths being parallel to each other in each layer so as to cover all of the layer. The mesh structure has tenaceous junctions of intersections and has high dimensional stability in the plane of the structure. This method is very effective in most applications, but does require skill and care in use, as well as requiring a specially manufactured mesh structure.

CH 592 219 discloses a method of strengthening cement, tar or bitumen, comprising randomly embedding in the matrix a large number of flexible pieces of plastics material mesh structure without creating a substantial amount of extra void space, each face of each piece having an area which is small relative to the size of the matrix, and each piece comprising more than one mesh opening. However, the pieces are initially supplied in the form of short, twisted cords which are arranged to open or untwist during mixing; mixing must be so timed that the cords have fully untwisted, but have not started to twist or otherwise close up again. It is believed that it would be very difficult to ensure that the cord untwists and opens up adequately, and very difficult to avoid any opened-up pieces closing up again—the pieces would have a tendency to roll up if there is any rolling motion during mixing (which normally occurs). In addition, it appears that the mesh structure is produced by forming parallel slits in plastics material film and then opening the film up by pulling it transvesely, possibly with some heat setting. This structure would have little transverse strength, and would act as a very poor reinforcement.

An article on pages 47 to 52 in C. R. Coll. Int. Renforcement des Sols. Paris 1979, discloses small strips for strengthening soil, but the strips do not give the optimum reinforcing effect as they have no significant transverse strength and would have a poor purchase on the soil.

GB 1 539 898 discloses the use of pieces of steel weld mesh to strengthen concrete, each piece having just one complete mesh. The pieces are relatively stiff and each has eight projecting wires, so that there will be a tendency to bridge and form extra void space.

EP—A—0 002 267 discloses the use of a composite fabric for reinforcing concrete. A large-mesh woven fabric has fibres adhered to it at various angles. It appears that the fabric is effectively continuous and that it is placed in layers in the cement, the fabric not being randomly embedded.


## The invention

The present invention provides methods as set forth in Claims 1 or 3, a machine as set forth in Claim 19 and strengthening material as set forth in Claim 18. The remaining Claims set forth preferred features of the invention.

The pieces of mesh structure provide a positive interlock with the matrix, and thus do not rely entirely on friction between or chemical bonding between the material of the piece and the matrix. In other words, particles of the matrix in different mesh openings are interlocked together. In soil at least, the mesh pieces plus interlocked soil particles form aggregates of particles within the soil mass. Providing there are sufficient mesh pieces, these aggregates will interact so that the whole mass of soil will be interlocked into a single improved mass. The effectiveness of the pieces depends upon them having tenaceous junctions or intersections which enables each piece to interlock effectively with the matrix and properly exploit the strength of the material of the piece without the piece tearing apart. In addition, each piece has high dimensional stability in the plane of the piece, which enables the piece to withstand forces in its plane and maintain the stability of the matrix.

Usually asphalts are graded so as to contain particles from a predetermined maximum size down to a fine powder and it is believed that in matrices of the invention, the large particles are anchored by the mesh pieces and the smaller particles are anchored by the larger particles.

In general, the mesh structure pieces can be easy to manufacture, providing a cheap strengthening.

2

The strengthening can be supplied in for instance compact rolls and be cut into the pieces immediately prior to mixing with the matrix.

The mixing of the pieces with the matrix is random (three-dimensional distribution in a random manner), and the mesh structure pieces would not in general be parallel to each other. Thus, in the specific case of plasterboard or concrete panels (or slabs), some pieces may extend in the direction at right angles to the faces as well as parallel to the faces, depending on the thickness of the panel; with thin panels (or sheets), the pieces would be more generally coplanar with the panel.

As each piece is small relative to the size of the matrix as a whole, and as the mixing is random, the pieces can be incorporated with ease in the matrix without advanced technology and without great skill even though there is a large number of the pieces. Nonetheless, it is surprisingly found that the pieces are highly effective in strengthening the matrix, provided no substantial amount of extra void space is created; for the purposes of this specification, the space occupied by the material of a mesh piece itself is not considered void space—it is desirable, though not essential, that the inclusion of the mesh pieces should not decrease the bulk density of the matrix (plus pieces).

In general terms, the following are examples of the application of the method of the invention:
soil strengthening, including stabilization;
the replacement of asbestos in asbestos cement sheeting;
general reinforcement of cement and concrete products;
plasterboard reinforcement;
chip-board reinforcement;
asphalt reinforcement.

There is a particular advantage with soil. If the soil on site is of poor quality, it is often practice to remove the soil and bring in good quality particulate or granular material, i.e. non-cohesive material; if the mesh structure pieces are mixed with the existing soil, its quality is improved. The load-bearing capacity of the existing soil is increased, reducing the amount of fill required above the soil for e.g. road construction. When properly mixed in soil in the correct proportions, the mesh pieces will act by altering the soil matrix to form a relatively homogeneous mass with improved engineering behaviour, referred to as a soil stabilization technique. With optimum strengthening, the incorporation of the mesh pieces can be equivalent to an increase in the overall soil angle of friction of 2° or 3° or by a load spreading effect through the strengthened layer, resulting in an effective increase in the width of the footing. In addition, soil normally has no significant elastic recovery; soil strengthened with the pieces appears to have some elastic recovery and could be particularly useful for dynamically-loaded locations, such as sub-bases for runways, roads or railways. Furthermore, at high strain (i.e. after significant movement), the strengthened soil still has high load bearing capacity and does not heave.

If the matrix is rigid, as in the case of concrete or cement-stabilised soil or cement-bound granular materials, the pieces can limit movement if cracking occurs and provide some elastic recovery; for instance in cement-stabilised soil, one normally expects a large number of very small cracks to be formed.

Material of pieces

The preferred pieces are of integral plastics material mesh structure comprising molecularly orientated strands. Plastics material mesh structures are easy to manufacture and handle. In specific cases such as concrete cladding sheets, the resistance to corrosion is very beneficial. If the method of making the mesh structure is suitably chosen, there can be a large amount of orientation or all zones of each piece can be at least partly orientated or even highly orientated, avoiding wastage of plastics material and also maximizing the tensile strength and modulus of the pieces. In the normal case where the meshes are four-sided and four strands issue from each junction or intersection, the mesh structure is preferably stretched in two directions along the alignments of the strands. In practice, this can be done by sequential biaxial stretching, stretching first along the alignment of one set of strands and then along the alignment of the other set of strands; or alternatively by stretching a diamond mesh in a single direction, to stretch all the strands, opening the meshes up laterally, and heat setting the mesh. Biaxially orientated structures are preferred as it is easier to achieve dimensional stability.

In general terms, any suitable integral plastics material mesh structure can be used, for instance as disclosed in GB 836 555, GB 969 655, GB 1 210 354, GB 1 250 478, GB 1 290 437, GB 2 034 240A or GB 2 035 191B; a deep strand structure such as that of GB 1 210 354 is very suitable because of better anchoring or interlock—the strands are non-circular, being deeper than they are wide.

In general terms, if a plastics material is used, preferred materials are high density polyethylene (HDPE), polypropylene (PP) or polyesters. HDPE or PP can be orientated to a degree corresponding to stretch ratios of 6:1 or more, preferably 10:1 or more; the stretch ratios for polyesters are less, for instance up to about 5:1. With e.g. asphalt reinforcement, where the pieces will be mixed with the hot asphalt, a suitable high temperature resistant plastics material, such as polyester, should be used; the mesh structure may have been heat-set at a temperature of up to for example 230°C.

Materials other than integral plastics material structures can be used, for instance non-metallic or organic-base materials such as resin-bonded open mesh woven structures, a preferred such structure being a Leno weave. For soils, the material should be non-biodegradable.

Other strengthening

The invention can have significant advantages if used in conjunction with other strengthening in the form of elongate members which extend part way or substantially right through the matrix. Such elongate members may be as disclosed in GB B 1 069 361 (where the elongate members could alternatively be made of fibreglass. For instance with a protective water-impermeable coating), GB 2 035 191B, GB 2 073 090B or GB 2 096 531A. The elongate members can be used not only in soil matrices, but also more generally, for instance in matrices comprising hydrocarbon, hydraulic or pozzolanic binders.

Tenaceous junctions or intersections

The junctions or intersections of the mesh must be tenaceous and should not rupture too easily under tensile forces, in whatever direction the forces are applied to the piece. This is because the pieces will mainly be distributed in the matrix in a multiplicity of directions, i.e. almost totally random. As the matrix is particulate, the effect of the pieces relies on interlock and this could cause splitting of the junctions or intersections even if tensile forces were applied along the axes of the strands, unless the junctions or intersections are tenaceous.

In general terms, the expression "tenaceous junctions or intersections" means that the junctions or intersections are not weak and can be stressed in any direction without rupturing too easily. Preferably, if opposed tensile forces are applied across the piece, in whatever direction, the strands rupture (break or split) before the junctions or intersections do so. It is however satisfactory if the tensile strength at break of the junctions or intersections in any direction across the piece and in the plane of the piece is not substantially less than 50% of the average tensile strength at break of the strands; i.e., in practical terms, it is found that the junction or intersection can be weaker than the strands and still perform in a satisfactory manner, though this is not preferred.

Isotropic strength

As far as possible, isotropic strength is aimed for under opposed tensile forces in the plane of the piece. This means that the tensile strength at break in any direction across the piece is not substantially less than that in any other direction across the piece, whether break occurs in a strand or at a junction. It is however satisfactory if the tensile strength at break in any direction across the piece (and in the plane of the piece) is not substantially less than 50% of that in any other direction across the piece. In general terms, it is desirable to structure a square or rectangular mesh so that it has substantially equal strengths in the two directions in which the strands extend.

High flexural recovery

The mesh pieces will be generally flat prior to mixing or embedding, i.e. at the most just slightly curved due to the curvature of the roll from which they have been produced. The pieces will have some flexibility and will not normally lie perfectly flat when embedded in the matrix. However the pieces should be chosen in relation to the material of the matrix so that they do not create a substantial amount of extra void space in the matrix. It is found that the mesh pieces can fold over or wrap around to a certain extent during embedding or mixing; a single fold reduces the effective area of a piece, and thus is not desirable, but interlock between the material of the matrix and the pieces still occurs, and no substantial extra void space is created. It is believed that extra void space is created when there are too many layers of the same piece in contact with each other or very close to each other—two layers, as in the case of folded pieces, do not seem to have a pronounced effect. Nonetheless, tight "condensation" of the mesh pieces, e.g. rolling up, twisting up, balling up or crumpling up, does create extra void space; the tight condensation would impede the penetration of the material of the matrix into the mesh structure and would not achieve proper interlock between the pieces and the matrix; in addition, where a piece is for instance rolled up, there may be a substantial void space in the middle, into which the material of the matrix has difficulty in penetrating. It is therefore desirable to avoid having a substantial number or proportion of pieces which are tightly condensed.

The pieces should have sufficient flexural recovery for a high proportion of them not to become condensed during embedding or mixing, and this is termed "high flexural recovery" herein. The flexural recovery can be thought of in terms of the stiffness or springiness of the material of the piece, the material being capable of high bending before yielding. Though it is believed that flexural recovery and/or flexural stiffness are the underlying properties, the actual value of the flexural recovery or stiffness of the mesh pieces need not be taken as the determinative criterion; the length of the piece, the nature of the matrix and the method of embedding are important.

Various tests can be devised for determining if substantial extra void space would be created. For instance, the material may be chosen so that the piece can be bent through a predetermined angle without excessive plastic deformation, the test being carried out over a short period of time at the temperature of incorporation into the matrix. A suitable standard flexural recovery test is as follows: four samples 40×100 mm are cut, one having its long sides parallel to one set of strands, and the others having their long sides at 45° in each direction and at 90° to those of the first sample. If only smaller specimens are available, the results can be estimated. With the samples horizontal, 60 mm of length are clamped adjacent an edge having a radius of 3 mm so that 40 mm project out over this edge. It is considered undesirable if the tip droops by a distance corresponding to an angle of greater than 3° measured along the chord of the drooping piece. The sample is then folded 90° down over the edge, held for five seconds, released, and after a further five seconds the angle to which it has reverted is read (again measured along the chord). The flexural recovery is the percentage of the original bend angle which is recovered, i.e. if the original droop is $a°$ and the sample returns to a droop of $b°$ (greater than $a°$), the flexural recovery is $100 \times (90-b)/(90-a)\%$. In practice, it is found that, to the nearest degree, it is possible to obtain 100% recovery, but reasonable quality pieces have 95% recovery; one should not use pieces having a recovery of less than 83%. The test can be carried out on specimens of a different size, but the size itself of the piece determines the tendency to, say, roll up during mixing, i.e. a larger piece will tend to roll up more easily.

For suitable soils, e.g. sands, a useful practical flexural recovery test is as follows. A sufficiently large sample of the strengthened soil is put into a compaction vessel and compacted to British Standard BS 5930—1981. After compaction, a further 100 mm of the same soil without the mesh pieces is added to cover the surface of the compacted mixture. The sample is then transferred in the vessel to a heated oven where it remains for a time and at a temperature suitable to dry out the sand and heat set the mesh pieces in the form they have taken up during mixing and compaction. After cooling, the mixture is tipped from the vessel onto a metal grid which is then vibrated until substantially all the soil has passed through the grid, leaving the heat-set mesh pieces available for examination. Substantially no mesh pieces should exhibit any substantial degree of rolling, balling, twisting or crumpling. A like test can be carried out for concrete or cement composites, the cement merely being omitted or possibly replaced with very fine sand.

If a convenient strengthened soil sample is required for laboratory work, it can be prepared as follows. Pieces of the mesh structure are progressively added by tumble mixing to a well graded sand (for example, Mid-Ross Sand), which sand contains a percentage moisture content which will ensure ease of mixing—the moisture content can be determined empirically. The mixing is continued until the required percentage of inclusion has been reached. Mixing should then be continued for a further one minute.

High dimensional stability

High primary dimensional stability in the plane of the piece means that there is considerable resistance to elongation when tensile forces are applied across the piece in a direction parallel to a set of strands; this is important. High secondary dimensional stability means that there is considerable resistance to the meshes closing up during mixing, particularly when tensile forces are applied across the diagonals of the meshes. If the meshes did close up on mixing, the entry of the matrix material into the meshes would be restricted. It may be important that there is good recovery of the original mesh shape after distortion.

A useful measure of secondary dimensional stability relates the "distortion load" to the weight of the piece per unit area. The distortion load is that tensile force which, when applied across any diagonal of the meshes, reduces the area of the mesh opening by half (related to its unloaded area). Generally, the distortion load:weight per square metre ratio may be as low as 0.5:1 (i.e. 50%), 0.6:1 or 0.75:1 (ratios below 0.5:1 not being preferred but not being excluded), though preferred minimum values are 1:1, 1.5:1, 2:1, 3:1 or 3.5:1.

The test should be carried out in the diagonal directions. Normally, if the secondary stability is sufficiently high, the primary stability will be sufficiently high and need not be separately tested. The test above can be applied for instance to pieces having very elongate rectangular meshes or having square or nearly square meshes.

A simpler calculation can be made for square or nearly square meshes if a modified distortion load is considered as that which reduces the opposite diagonal dimension by half—a rather smaller load need be applied, and the relative decreases differ because the different mesh sizes and weights change the stiffness. The modified distortion load:weight per square metre ratio is preferably at least 0.6:1 (i.e. 60%) and may be at least 0.8:1 or 1:1, though minimum values of 2:1 or 2.5:1 or more can be realised with some materials.

Density

The relative density of the material of the pieces of mesh structure may be important, depending on the method of mixing and the consistency of the matrix for instance before setting or consolidation. The pieces should remain distributed randomly throughout the matrix, i.e. should not all tend to rise to the top or sink to the bottom.

Tensile modulus

The effective tensile modulus of the piece should ideally be similar to that of the matrix if the matrix is rigid, using high modulus structures for matrices such as concrete; however, the invention is still beneficial if the modulus is lower. Low modulus structures can be used for matrices such as soil.

Proportion of pieces to matrix

In any matrix there will be a large number of pieces. For any particular matrix and mesh piece, there will be an optimum number of pieces per unit volume to obtain maximum improvement of properties; this can be determined experimentally. The proportion of pieces used will depend upon inter alia the nature of the matrix, particle size distribution in the matrix, strand size, mesh pitch, overall size and shape of pieces,

# 0 122 995

and flexural stiffness and tensile stiffness of the mesh pieces. If the amount of mesh pieces is too great, the mesh pieces will grossly interfere with each other (and may fold) and the matrix/piece interlock action will be suppressed, reducing the strength of the matrix—thus inadquate strength of the individual pieces cannot be compensated for by using a very large amount of the pieces. Nonetheless, there may be so many pieces per unit volume that without the matrix present, the pieces would provide a self-supporting mass of about the same volume—if, as is normal, strands protrude from the edges of the pieces, the mass can be coherent to a certain extent as protruding strands or even the corner of one piece can engage in the mesh opening of another piece; the effect occurred particularly when using larger mesh pitches. The effect was specifically noted when pieces of 18 mm pitch mesh having just four complete mesh openings (2×2) were used at 0.5% w/w (dry weight) to strengthen sand.

It is believed that a preferred minimum is about 5,000 or 10,000 pieces per cubic metre and a preferred maximum is about 500,000 pieces per cubic metre, though the number depends inter alia on the size of the pieces.

In general, the proportion w/w of the pieces to the matrix is preferably from about one tenth of that proportion at which the matrix has maximum density to about two and a half times that proportion. All proportions are given herein for dry weight. For soil, the proportion is preferably less than about 2% or 1% but preferably more than about 0.05%. For hydrocarbon, hydraulic and pozzolanic binder products, the proportion is preferably as for soil, or may be up to 5%.

Number of mesh openings in a piece

Preferably, each piece has up to a thousand, five hundred or two hundred and fifty complete mesh openings, the more preferred number being about twenty-five or twenty but for instance eight or nine being possible. It is also possible to operate with pieces having as few as three or four complete mesh openings.

Size of pieces

In general, each piece has an area (i.e. the area of each face of the piece) of about 20,000 mm² or less. Each face of the piece will have an area which is small relative to the size of the matrix being strengthened. The greatest dimension of the piece would be small relative to the greatest dimension of the matrix, e.g. less than one tength or one hundredth of one thousandth of the matrix greatest dimension. As long as the mesh structure pieces have small widths, they can be quite long. For instance up to 300, 400 or 500 mm long, or even longer. Nonetheless, it is preferred that the pieces be roughly square or at least that the length be of the same order as the breadth, e.g. not more than ten times the breadth and more preferably not more than twice the breadth.

When strengthening soil, the area of each face of the pieces is preferably about 10,000 mm² or less, the preferred area being about 1,000 mm², for instance 35 mm square or 30×40 mm. If however the pieces are long and relatively narrow, each face can have areas significantly greater than 10,000 mm², up to 20,000 m².

For hydrocarbon binder products, the area of the pieces can be rather larger than for soil, e.g. about 20,000 mm² or less.

For hydraulic or pozzolanic binder products, the area of the pieces can be as for soil, though much smaller pieces, say down to about 100 mm² (area of each face) are conceivable; the mesh size may depend on the size of the aggregate or filler, but for instance for cement roofing sheets, the pieces may be much smaller than for soil strengthening.

Mesh size and strand thickness

It is easier to consider pitch than mesh size. The pitch may be chosen in relation to the particle size of the matrix. For soil particle sizes, one normally considers the D85 value, which is the grid size through which 85% w/w of the soil passes. It is preferred that the pitch should be substantially greater than the particle size, a preferred maximum being 25 times particle size and a preferred minimum being twice particle size. In general for strengthening those soils and granular maetrials which are normally used, the pitch may be between 5 and 40 mm. For fine sand having a 1 mm D85 value, the pieces can have a roughly square pitch of about 3 mm and a strand thickness of for instance about 0.1 mm. For hydrocarbon, hydraulic and pozzolanic binder products having a maximum particle size of 20 mm, the pieces can have a roughly square pitch of about 50 mm with a strand thickness of for instance about 2 mm.

The drawings

The invention will be further described, by way of example, with reference to the accompanying drawings, in which:—

Figure 1a is a schematic slice through a matrix strengthened in accordance with the invention;

Figure 1b illustrates mesh pieces which are not in accordance with the invention;

Figure 1c illustrates mesh pieces which are in accordance with the invention;

Figures 1d and 1e are schematic, theoretical figures illustrating the behaviour of the strengthened matrix;

Figures 2 to 4 are views of three different pieces of mesh structure used in accordance with the invention;

6

Figure 5 is a diagram showing the tensile forces applied to a piece when testing the piece;

Figures 6a and 6b are graphs of bearing ratio and dry density against mesh piece content;

Figure 6c is a graph of load bearing capacity against strain;

Figures 7 and 8 are schematic side elevations of first and second soil strengthening machines in accordance with the invention; and

Figure 9 is an isometric projection of a roll of mesh structure material which can be used in the machine of Figures 7 and 8.

### Figures 1a to 1e

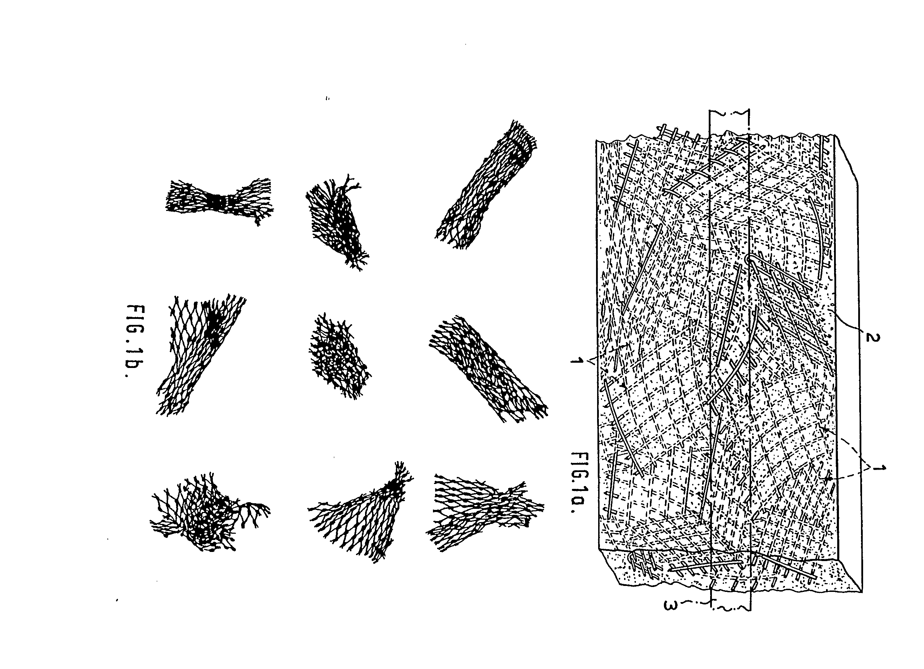

Figure 1a shows pieces 1 of integral plastics material mesh structure, mixed randomly with a matrix 2. The slice shown will have a finite thickness, e.g. one tenth of the height of the panel or layer, all the pieces 1 (or parts thereof) within the slice being depicted in dashed lines—for clarity, the pieces 1 are not shown cut off at the edges of the slice and projecting parts are shown in full lines. If desired, continuous, elongate strengthening or reinforcing member 3 can be incorporated in the matrix 2.

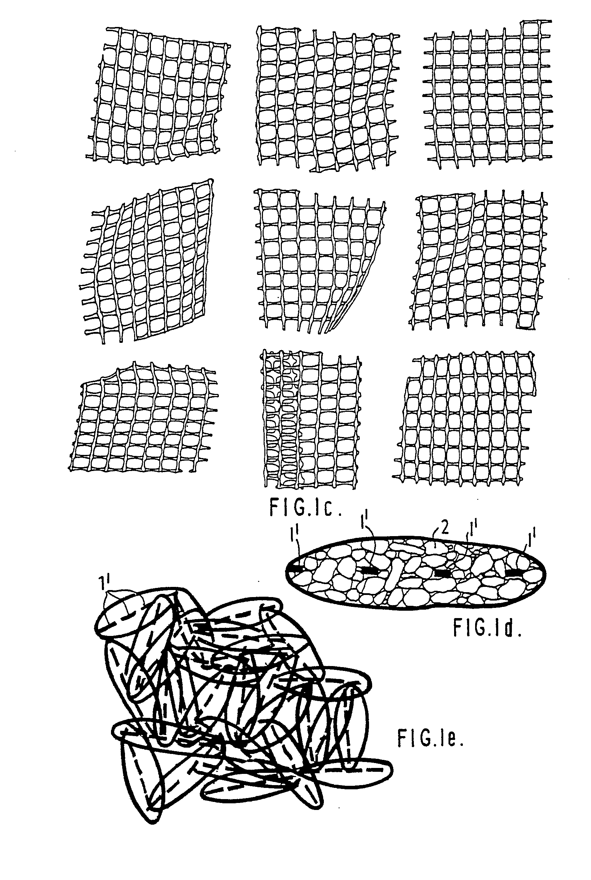

Figures 1b and 1c illustrate samples of mesh pieces recovered after mixing and compacting in said practical flexural recovery test described above. Figure 1b illustrates the result of using unsuitable mesh pieces which met the requirements of the test in only one direction. Figure 1c illustrates the result of using suitable mesh pieces (Example 4 of Table 1 below).

Figure 1d shows a theoretical interlocked soil assemblage, with soil particles 2' interlocked by the filaments 1' of a single piece 1. Figure 1e shows interlocked assemblages in the soil mass.

### Figures 2 to 4

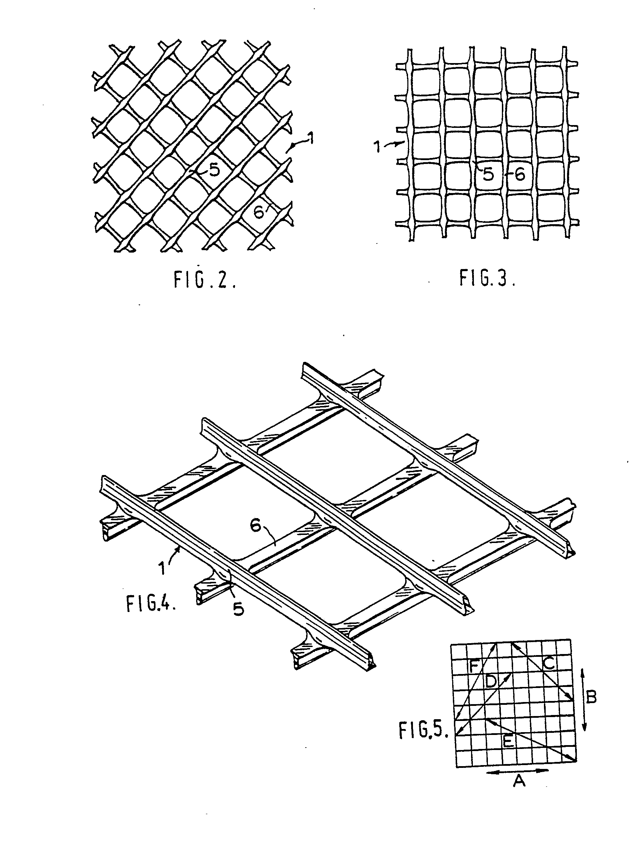

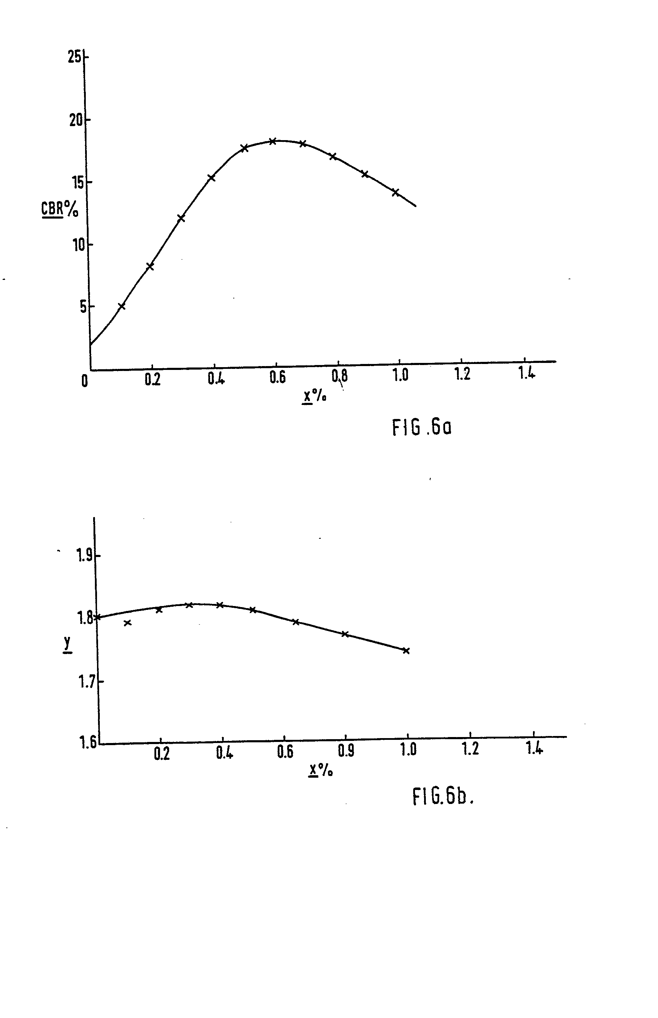

The piece 1 of Figure 2 was a heat-set, orientated biplanar diamond mesh structure of GB 836 555. The piece 1 of Figure 3 was a heat-set biplanar biaxially-orientated square mesh structure of GB 1 250 478. Figures 2 and 3 illustrate that the pieces can be "on the diamond" or "on the square". The piece 1 of Figure 4 was a deep strand structure as disclosed in GB 1 210 354. In each of Figures 2 to 4, there are intersections or junctions 5 interconnected by highly orientated strands 6; in Figures 2 and 3, the intersections 5 are unorientated whereas in Figure 4, some orientation has occurred in the intersections 5.

### Figure 5

Various mesh structures were subjected to "hook tests" to determine their tensile strengths in various directions across the structure. Tables 1 and 2 below give the results. Each of the mesh structures were biaxially orientated, having been stretched roughly to the same stretch ratio in each of two directions at 90°; the strands were highly orientated. Mesh structures 1 to 3 were as in Figure 3 and had been stretched 4.5:1 overall. The orientation passed into the intersections, though there was some unorientated material in each intersection. Mesh structures 4 to 6 were biplanar mesh structures produced by the method of GB 969 655 and stretched 4:1 overall. Mesh structure 7 was as in Figure 4, and had been stretched 6:1 overall, without heat-setting. Mesh structure 8 was as in Figure 3, and had been stretched 4:1 overall and heat-set at 185°C.

As illustrated in Figure 5, the forces were applied in four or six different directions A to D or A to F, two being along the respective strands and two being along the respective diagonals. These directions were chosen because the maximum strength and the minimum strength should be represented, at least approximately. Tables 1 and 2 give the strengths at peak load together with some details of the material. In no case did the junction or intersection break. In each case, the minimum force at break was greater than 50% of the maximum. The extension at peak load for A and B is given in Table 2 as a percentage (as an average for mesh structures 1 to 3). The thinnest part of any strand was roughly at its mid-point.

Table 2 also gives the distortion load and the modified distortion load as a ratio to the weight per unit metre of the mesh structure. As the meshes were square and the structures balanced, the ratios for loads on respective diagonals were very close to each other—Table 1 gives the average. In all cases, the mesh structures had high primary dimensional stability. In all cases, the materials passed said practical flexural recovery test (mesh structure 4 is illustrated in Figure 1c).

Mesh structures 7 and 8 were not available and were not tested, their unit weights being estimated. It is believed that they would comply with the dimensional stability and flexural recovery tests.

TABLE 1

| Mesh struc-ture | Material | Unit wt gm/m² | Mesh pitch mm | | Strand thickness (mid-point) mm | |
|---|---|---|---|---|---|---|
| | | | Direc-tion A | Direc-tion B | Direc-tion A | Direc-tion B |
| 1 | HDPE | 38.2 | 6.0 | 6.0 | 0.25 | 0.24 |
| 2 | HDPE | 14.5 | 6.0 | 6.0 | 0.25 | 0.21 |
| 3 | PP | 17.4 | 6.0 | 6.0 | 0.23 | 0.19 |
| 4 | PP | 40 | 4.3 | 5.1 | 0.39 | 0.20 |
| 5 | PP | 18.5 | 6.2 | 7.2 | 0.24 | 0.17 |
| 6 | PP | 15.4 | 3.3 | 3.5 | 0.07 | 0.17 |
| 7 | PP | 60 | 10.0 | 10.0 | * | * |
| 8 | Poly-ester | 150 | 20.0 | 20.0 | 1.2 | 1.2 |

*Strand width 0.3 mm, strand height 2 mm, averaged for each direction.

TABLE 2

| Mesh struc-ture | Hook break load (peak load kg) | | | | | | Ratio of max to min break load | % Extension to peak load | |
|---|---|---|---|---|---|---|---|---|---|
| | A | B | C | D | E | F | | | |
| 1 | 1.44 | 1.40 | 1.65 | 1.74 | 1.66 | 1.72 | 1.24:1 | 27 | |
| 2 | 0.98 | 1.04 | 1.37 | 1.30 | 1.16 | 1.23 | 1.40:1 | 25 | |
| 3 | 1.38 | 1.18 | 1.67 | 1.52 | 1.50 | 1.60 | 1.42:1 | 15 | |
| 4 | 1.47 | 1.88 | 1.50 | 1.29 | — | — | 1.46:1 | 55 | 35 |
| 5 | 1.26 | 1.53 | 0.87 | 1.34 | — | — | 1.76:1 | 66 | 25 |
| 6 | 0.59 | 0.51 | 0.38 | 0.35 | — | — | 1.69:1 | 55 | 100 |

TABLE 3

| Mesh structure | Distortion load ratio (to 50% open area) | Modified distortion load ratio (to 50% diagonal dimension) |
|---|---|---|
| 1 | 3.7:1 | 2.61:1 |
| 2 | 4.2:1 | 2.35:1 |
| 3 | 5.3:1 | 4.98:1 |
| 4 | 6.5:1 | — |
| 5 | 4.0:1 | — |
| 6 | 6.5:1 | — |

Figures 6a to 6c

Figure 6a illustrates the variation of the average (top and bottom) CBR value of a Mid-Ross Sand with 9.3% w/w moisture content (believed slightly above optimum), as the content of the mesh pieces ($x$) is altered (the content is given as % w/w of dry sand). Figure 6b shows how the dry density of the mixutre ($y$) in tonnes per m$^3$ alters with the w/w content of the mesh pieces ($x$); the density initially rises because the pieces occupy some of the void space. The mesh pieces were 40×40 mm squares of mesh structure 4, above (as in Example 4 of Tables 4 and 5, below). The mixture was compacted in accordance with BS 5930—1981, and the bearing strength was measured in accordance with the CBR standard test.

The maximum in Figure 6a is at about 0.65% (though it extends roughly from 0.5% to 0.7%) and that in Figure 6b is about 0.32%. Thus the maximum strength occurred at a proportion of pieces which was roughly double that which gave maximum density. The inclusion of the optimum amount of the mesh pieces increased the CBR value to a value over eight times the original value. However it may be economical to reduce the inclusion of mesh pieces—for instance the CBR value is more than doubled at 0.1% w/w, compared to unstrengthened sand.

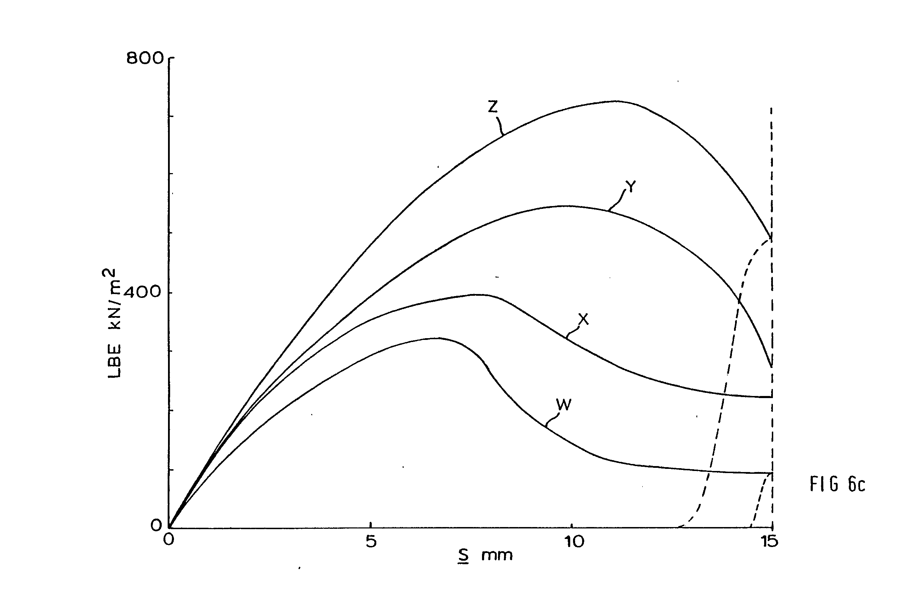

Figure 6c shows the variation of stress or load bearing capacity (in KN/m$^2$) against strain $s$ (expressed as movement in mm) when Mid-Ross Sand with 9.3% moisture content, placed 170 mm deep in a 500 mm long×75 mm wide×500 mm deep tank is compressed by a square section 75×75 mm plate moving vertically downwards. Curve W is for sand alone; curves X, Y and Z are as for curve W but with the top 37.5, 75 mm and 150 mm respectively replaced by sand mixed with 0.1% w/w mesh pieces as for Figures 6a and 6b.

When the maximum load bearing capacity is exceeded, sand moves sideways and heaves up around the plate. It will be seen that the incorporation of the mesh pieces not only increases the maximum load bearing capacity, but also causing it to occur at greater strains.

The graph also shows in dashed lines the reversion as the plate is unloaded from the point of maximum load bearing capacity. In the case of sand alone (W), there is minimal recovery or elasticity. In the case of the strengthened sand (Z), there is significant recovery or elasticity.

Tables 4 and 5 below give the data for the optimum CBR values, using mesh structures 4 to 6 to strengthen a Mid-Ross Sand with 9.3% w/w moisture content.

TABLE 4

| Ex | Mesh structure | Average size of mesh pieces mm | Average no. of mesh openings | Content % w/w | Area in m$^2$ per m$^3$ of soil |
|---|---|---|---|---|---|
| 1 | 4 | 40×40 | 63 | 0.64 | 290 |
| 2 | 5 | 40×40 | 30 | 0.31 | 303 |
| 3 | 5 | 40×40 | 131 | 0.10 | 98 |
| 4 | 6 | 40×40 | 121 | 0.30 | 353 |

TABLE 5

| Example | CBR% | |
| | Top | Bottom |
|---|---|---|
| 1 | 11.0 | 21.5 |
| 2 | 7.0 | 12.5 |
| 3 | 5.8 | 7.5 |
| 4 | 4.5 | 11.0 |

Though Table 4 refers to square-shaped pieces, they could be elongate. Specifically, as an example for strengthening soil, the pieces of Examples 1 to 4 could have a length of 400 mm and a width of 40 mm. The following Examples are theoretical. Some details are collated in Table 6 below.

Example 5 (strengthening soil)

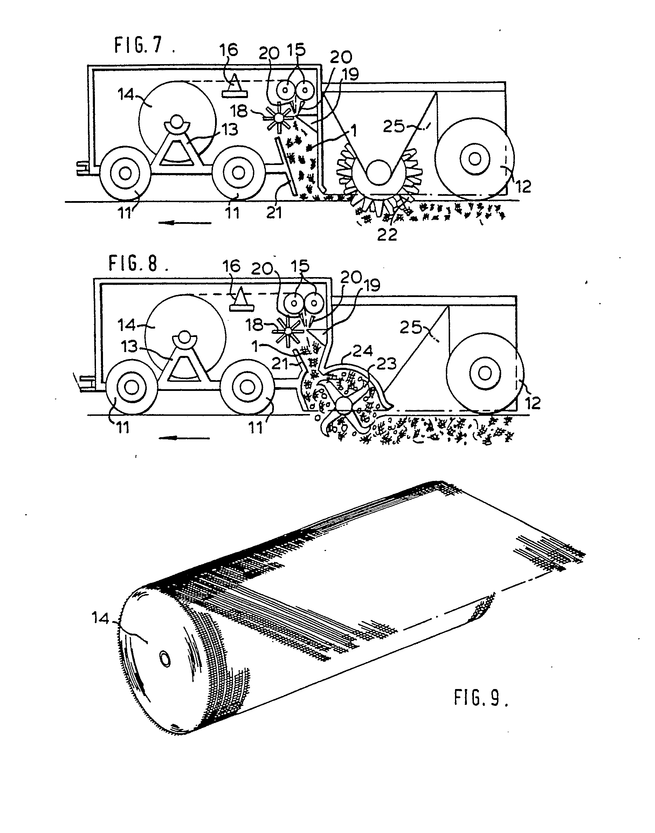

Using the machine of Figure 8 below, a mass of soil (which could be from 5 m³ up to 5×10⁸ m³) is strengthened. The soil was Mid-Ross Sand having a D85 value of 1.7 mm and a dry density of 2000 Kg/m³ (moisture content was 9.3% w/w).

Examples 6 to 9 (strengthening soil)

Example 6 is as for Example 5, but a lower proportion of mesh pieces is used. Examples 7 to 9 use a lighter mesh structure (in this case the mesh structure 6 had a unit weight of 15.0).

Example 10 (strengthening concrete)

A 1000×500×50 mm concrete slab was formed by mixing in a conventional mixer a graded aggregate with a maximum size of 10 mm, sand, Portland cement and the pieces of Example 8 in the proportions (dry weight) 1250:370:240:6.7 (the pieces were 0.3% of the total dry weight); 180 parts water were also added. The slab would still be in a usable state even if it contained a large number of cracks because of a large number of mesh pieces bridge the cracks. Ih would be possible to use smaller mesh pieces. Though the mesh structure 8 was heat-set, heat-setting is unnecessary for use in cement. In this Example (as also in Example 11), the presence of particles in the aggregate which are large relative say to sand enable a normal mesh structure to be used; however, it would be possible to use a deep strand structure as in Figure 4.

Example 11 (strengthened asphalt)

10 mm maximum particle size gap-graded aggregate was mixed with the pieces in an asphalt mixing machine, and the mixture was mixed with asphalt at 170°C. The asphalt was applied to a road surface as a wearing course 50 mm thick (and at least 10 m long and 3 m wide). The asphalt would show less rutting in a wheel tracking test than unstrengthened asphalt.

TABLE 6

| Ex | Mesh structure | Unit wt gm/² | Average size of mesh pieces mm | Average no. of mesh openings per piece (calculated) | Content % w/w (dry) | Area in m² per m³ matrix | Pieces per m³ (nearest thousand) |
|---|---|---|---|---|---|---|---|
| 5 | 7 | 60 | 45×45 | 16 | 0.2 | 67 | 33000 |
| 6 | 7 | 60 | 45×45 | 16 | 0.1 | 33 | 16000 |
| 7 | 6 | 15 | 40×40 | 121 | 0.1 | 136 | 85000 |
| 8 | 6 | 15 | 40×40 | 121 | 0.5 | 680 | 425000 |
| 9 | 6 | 15 | 100×100 | 809 | 0.1 | 136 | 14000 |
| 10 | 8 | 150 | 60×60 | 4 | 0.3 | 48 | 13000 |
| 11 | 8 | 150 | 60×60 | 4 | 0.5 | 77 | 21000 |

Figures 7 to 9

Figures 7 and 8 show two similar machines, and the same references are used for the same or like parts. Each machine is in the form of a vehicle or trailer. Each machine has running wheels 11 and a compaction roller 12. Each machine has a support 13 for an e.g. one metre diameter roll 14 of mesh structure which can be for instance two metres wide. As the machine travels along, the mesh structure is hauled off by haul-off rolls 15, is divided into strips (say up to fifty strips) by longitudinal slitting knives 16 and is divided into pieces 1 by a rotary cutter 18 which co-operates with a ledger bar 19 below inclined guides 20; as an alternative, the roll 14 could be pre-slit into ribbon-like long narrow strips, as shown in Figure 9, each strip having at least two complete mesh openings across its width. The pieces 1 are guided down by a funnel 21. As the pieces 1 could stick in the funnel 21, a blower (not shown) may be incorporated to blow the pieces 1 down the funnel 21.

In the machine of Figure 7, there is a rotary multiple tine tool 22 for placing of pushing the pieces 1 in or into the ground. The individual tines are of different lengths and can have for instance a tip cross-section of 15×15 to 35×35 mm, being smooth truncated cones. There can be about five thousand tines on the tool 22.

In the machine of Figure 8, the means for placing the pieces 1 in the ground is in the form of a rotary tool 23 for digging up the top layer of soil. There is a shroud 24 which guides the thrown up soil to the bottom of the funnel 21, where the loose soil is mixed with the pieces 1.

Both machines can be provided with side curtains 25 to reduce the possibility or wind disturbance of the pieces 1.

The machines are towed (or pushed) in the direction of the arrow. Once the pieces 1 have been placed in the ground, the ground is compacted by the roller 12.

It will of course be understood that the present invention has been described above purely by way of example, and modification of detail can be made within the scope of the invention as defined in the appended Claims.

**Claims**

1. A method of strengthening a particulate matrix (2), comprising randomly embedding therein without creating a substantial amount of extra void space, a substantial number of generally flat, flexible, open mesh structure pieces (1) per cubic metre of matrix (2), characterised in that:

each piece (1) has an area of about 20,000 mm² or less, which area is small relative to the size of the matrix (2);

each piece (1) comprises more than one complete mesh opening;

in each piece (1), as measured in its plane, the tensile strength at break in any direction across the piece (1) is not substantially less than 50% of that in any other direction across the piece (1);

each piece (1) has a flexural recovery of at least 83% as determined by the standard flexural recovery test set forth in the description; and

in each piece (1) the tensile force which, when applied across any diagonal of a mesh opening of the

11

piece (1) reduces the area of the mesh opening by half, is equal to at least 50% of the weight of the piece (1) per square metre.

2. The method of Claim 1, wherein each piece (1) is roughly square.

3. A method of strengthening a particulate matrix (2), comprising randomly embedding therein without creating a substantial amount of extra void space, a substantial number of generally flat, flexible, open mesh structure pieces (1) per cubic metre of matrix (2), characterised in that:

each piece (1) has an area of about 20,000 mm² or less, which area is small relative to the size of the matrix (2);

each piece (1) comprises more than one complete mesh opening, which mesh openings are roughly square;

in each piece (1), as measured in the plane of the piece (1), the tensile strength at break in any direction across the piece (1) is not substantially less than 50% of that in any other direction across the piece (1);

each piece (1) has a flexural recovery of at least 83% as determined by the standard flexural recovery test set forth in the description; and

in each piece (1) the tensile force which, when applied across any diagonal of a mesh opening of the piece (1) reduces the opposite diagonal dimension by half, is equal to at least 60% of the weight of the piece (1) per square metre.

4. The method of any of the preceding Claims, wherein the mesh structure is an integral plastics material mesh structure comprising molecularly-orientated strands (6).

5. The method of any of the preceding Claims, wherein the strands (6) of the mesh structure are non-circular, having a greater dimension at right angles to the plane of the piece (1) than the dimension in the plane of the piece (1).

6. The method of any of the preceding Claims, wherein there are at least ten thousand of the pieces (1) per cubic metre of matrix.

7. The method of any of the preceding Claims, wherein each piece (1) contains not more than one thousand complete mesh openings.

8. The method of any of the preceding Claims, wherein the matrix (2) is soil.

9. The method of Claim 8, wherein the pieces (1) are about 2% or less of the matrix (2) (dry weight).

10. The method of Claim 8, wherein the pieces (1) are about 1% or less of the matrix (2) (dry weight).

11. The method of any of Claims 8 to 10, wherein the pieces (1) are about 0.05% or more of the matrix (2) (dry weight).

12. The method of Claim 11, wherein the pieces (1) are about 0.2% or more of the matrix (2) (dry weight).

13. The method of any of Claims 1 to 7, wherein the matrix (2) has a hydrocarbon binder.

14. The method of any of Claims 1 to 7, wherein the matrix (2) has a hydraulic or pozzolanic binder.

15. The method of Claim 13 or 14, wherein the pieces (1) are about 5% or less of the matrix (2) (dry weight).

16. The method of Claim 15, wherein the pieces (1) are about 1% or less of the matrix (2) (dry weight).

17. The method of any of the preceding Claims, wherein the mesh structure of the pieces (1) is formed by two sets of strands, the strands in any one set extending substantially parallel to each other and the strands of one set extending substantially at right angles to the strands of the other set, thereby defining four-sided mesh openings.

18. Strengthening material when used in the method of Claim 1 or 3, comprising a roll (14) of flexible open mesh structure for division into said pieces (1), characterised in that the roll (14) is in the form of a plurality of long narrow strips of the mesh structure in coaxial, side-by-side rolls, the properties of each strip being such that when the strip is divided into pieces (1) each comprising more than one complete mesh opening and having an area of about 20,000 mm² or less, the pieces (1) are as set forth in Claim 1 or 3.

19. A soil-strengthening machine arranged to move over soil being strengthened by the method of Claim 8, characterised in that the machine has a support (13) carrying mesh structure (14) as set forth in Claim 17, has means (16, 18, 19) for dividing the mesh structure (14) into the pieces (1), and has means (22 or 23, 24) for placing the pieces (1) in the ground.

**Patentansprüche**

1. Verfahren zur Verstärkung einer Partikel-Grundmasse (2), bei dem in die Grundmasse in unregelmäßiger Weise und ohne Erzeugung eines wesentlichen Anteiles an zusätzlichem leeren Raum eine wesentliche Anzahl von im allgemeinen flachen, biegsamen, offenen Maschengebilde-Stücken (1) pro Kubikmeter Grundmasse (2) eingelagert wird, dadurch gekennzeichnet,

daß jedes Stück (1) eine Fläche von 20 000 mm² oder weniger aufweist, wobei diese Fläche relativ zur Größe der Grundmasse (2) klein ist,

daß jedes Stück (1) mehr als eine vollständige Maschenöffnung aufweist,

daß in jedem Stück (1), gemessen in dessen Ebene, die Zugfestigkeit beim Bruch in einer Richtung quer über das Stück (1) nicht wesentlich weniger als 50% der Bruch-Zugfestigkeit in einer anderen Richtung quer über das Stück (1) ist,

daß jedes Stück (1) eine Biegerückstellung von wenigstens 83% gemäß dem Norm-Biegerückstellungs-Versuch laut Beschreibung hat, und

daß bei jedem Stück (1) die Zugkraft, die bei Anwendung quer über eine Diagonale einer Maschenöffnung des Stückes (1) die fläche der Maschenöffnung um die Hälfte verkleinert, gleich ist wenigstens 50% des Gewichtes des Stückes (1) pro Quadratmeter.

2. Verfahren nach Anspruch 1, dadurch gekennzeichnet, daß jedes Stück (1) annähernd quadratisch ist.

3. Verfahren zur Verstärkung einer Partikel-Grundmasse (2), bei dem in die Grundmasse in unregelmäßiger Weise und ohne Erzeugung eines wesentlichen Anteiles an zusätzlichem leeren Raum eine wesentliche Anzahl von im allgemeinen flachen, biegsamen, offenen Maschengebilde-Stücken (1) pro Kubikmeter Grundmasse (2) eingelagert wird, dadurch gekennzeichnet,

daß jedes Stück (1) eine Fläche von 20 000 mm² oder weniger aufweist, wobei diese Fläche relativ zur Größe der Grundmasse (2) klein ist,

daß jedes Stück (1) mehr als eine vollständige Maschenöffnung aufweist, wobei die Maschenöffnungen annähernd quadratisch sind,

daß in jedem Stück (1), gemessen in dessen Ebene, die Zugfestigkeit beim Bruch in einer Richtung quer über das Stück (1) nicht wesentlich weniger als 50% der Bruch-Zugfestigkeit in einer anderen Richtung quer über das Stück (1) ist,

daß jedes Stück (1) eine Biegerückstellung von wenigstens 83% gemäß dem Norm-Biegerückstellung-Versuch leut Beschreibung hat, und

daß bei jedem Stück (1) die Zugkraft, die bei Anwendung quer über eine Diagonale einer Maschenöffnung des Stückes (1) die Fläche der Maschenöffnung um die Hälfte verkleinert, gleich ist weignstens 60% des Gewichtes des Stückes (1) pro Quadratmeter.

4. Verfahren nach einem der vorhergehenden Ansprüche, dadurch gekennzeichnet, daß das Maschengebilde ein eine vollständige Ganzheit bildendes Kunststoffmaterial-Maschengebilde mit molekular orientierten Strängen (6) ist.

5. Verfahren nach einem der vorhergehenden Ansprüche, dadurch gekennzeichnet, daß die Stränge (6) des Maschengebildes nicht-kreisförmig sind und rechtwinkelig zur Ebene des Stückes (1) eine größere Abmessung aufweisen als in der Ebene des Stückes (1).

6. Verfahren nach einem der vorhergehenden Ansprüche, dadurch gekennzeichnet, daß mindestens 10 000 Stücke (1) pro Kubikmeter Grundmasse vorgesehen sind.

7. Verfahren nach einem der vorhergehenden Ansprüche, dadurch gekennzeichnet, daß jedes Stück (1) nicht mehr als 1 000 vollständige Maschenöffnungen aufweist.

8. Verfahren nach einem der vorhergehenden Ansprüche, dadurch gekennzeichnet, daß die Grundmasse (2) ein Erdbodenmaterial ist.

9. Verfahren nach Anspruch 8, dadurch gekennzeichnet, daß die Stücke (1) ungefähr 2% oder weniger der Grundmasse (2) (Trockengewicht) ausmachen.

10. Verfahren nach Anspruch 8, dadurch gekennzeichnet, daß die Stücke (1) ungefähr 1% oder weniger der Grundmasse (2) (Trockengewicht) ausmachen.

11. Verfahren nach einem der Ansprüche 8 bis 10, dadurch gekennzeichnet, daß die Stücke (1) ungefähr 0,05% oder mehr der Grundmasse (2) (Trockengewicht) ausmachen.

12. Verfahren nach Anspruch 11, dadurch gekennzeichnet, daß die Stücke (1) ungefähr 0,2% oder mehr der Grundmasse (2) (Trockengewicht) ausmachen.

13. Verfahren nach einem der Ansprüche 1 bis 7, dadurch gekennzeichnet, daß die Grundmasse (2) ein Kohlenwasserstoff-Bindemittel enthält.

14. Verfahren nach einem der Ansprüche 1 bis 7, dadurch gekennzeichnet, daß die Grundmasse (2) ein hydraulisches oder eine Pozzolanerde/Gipsschlackezement-Bindemittel enthält.

15. Verfahren nach Anspruch 13 oder 14, dadurch gekennzeichnet, daß die Stücke (1) ungefähr 5% oder weniger der Grundmasse (2) (Trockengewicht) ausmachen.

16. Verfahren nach Anspruch 15, dadurch gekennzeichnet, daß die Stücke (1) ungefähr 1% oder weniger der Grundmasse (2) (Trockengewicht) ausmachen.

17. Verfahren nach einem der vorhergehenden Ansprüche, dadurch gekennzeichnet, daß das Maschengebilde der Stücke (1) von zwei Sätzen von Strängen gebildet ist, die Stränge jedes Satzes im wesentlichen parallel zueinander verlaufen, die Stränge eines Satzes im wesentlichen rechtwinkelig zu den Strängen des anderen Satzes verlaufen und dadurch vierseitige Maschenöffnungen begrenzt sind.

18. Verstärkungsmaterial, angewendet bei dem Verfahren nach Anspruch 1 oder 3 und aufweisend eine Rolle (14) von biegsamen offenen Maschengebilde zur Zerteilung in die Stücke (1), dadurch gekennzeichnet, daß die Rolle (14) die form von einer Vielzahl von langen schmalen Streifen des Maschengebildes als koaxiale, Seite an Seite angeordnete Rollen aufweist und daß die Eigenschaften jedes Streifens so sind, daß bei Zerteilung des Streifens in Stücke (1), von denen jedes mehr als eine vollständige Maschenöffnung und eine Fläche von ungefähr 20 000 mm² oder weniger aufweist, die Stücke (1) gemäß Anspruch 1 oder 3 sind.

19. Maschine zur Verstärkung von Erdbodenmaterial und eingerichtet zur Bewegung über Erdbodenmaterial, das nach dem Verfahren gemäß Anspruch 8 zu verstärken ist, dadurch gekennzeichnet, daß die Maschine einen Träger (13), der das Maschengebilde (14) gemäß Anspruch 17 trägt, Mittel (16, 18,

## 0 122 995

*19) zur Zerteilung des Maschengebildes (14) in die Stücke (1), und Mittel (22 oder 23, 24) zum Einlegen der Stücke (1) in den Grund aufweist.*

### Revendications

1. Procédé de renforcement d'une matrice particulaire (2) consistant à noyer dans celle-ci, sans créer une quantité notable d'espaces vides supplémentaires, un nombre important de pièces sensiblement plates et flexibles de structure en treillis ouvert (1) par mètre cube de la matrice 2, caractérisé en ce que chaque pièce (1) présente une superficie d'environ 20.000 mm² ou plus, superficie qui est faible par rapport à la taille de la matrice (2); chaque pièce (1) comporte plus d'une ouverture complète de treillis; dans chaque pièce (1), mesurée dans son plan, la résistance à la rupture par traction dans n'importe quelle direction en travers de la pièce 1 n'est pas sensiblement inférieure à 50% de celle dans une autre direction quelconque dans la pièce (1); chaque pièce (1) présente un rappel en flexion d'au moins 83% déterminé par le test normalisé de rappel en flexion qui est défini dans la description; et dans chaque pièce (1) la force de traction qui, quand on l'applique suivant une diagonale quelconque d'une ouverture de treillis dans le pièce (1) réduit la superficie de l'ouverture du treillis de moitié, est égale à au moins 50% du poids de la pièce (1) par mètre carré.

2. Procédé selon la revendication 1, dans lequel chaque pièce (1) est grossièrement carré.

3. Procédé de renforcement d'une matrice particulaire (2), qui consiste à noyer de façon fortuite dans celle-ci, sans créer une quantité notable d'espaces vides supplémentaires, un nombre important de pièces sensiblement plates et flexibles d'un treillis ouvert (1) par mètre cube de la matrice (2), caractérisé en ce que chaque pièce (1) présente une superficie d'environ 20.000 m², superficie que est faible par rapport à la taille de la matrice (2);

dans chaque pièce (1) mesurée dans le plan de la pièce (1), la résistance à la rupture par traction dans une direction quelconque dans la pièce (1) n'est pas sensiblement inférieure à 50% de celle dans n'importe quelle autre direction dans la pièce (1); chaque pièce (1) présente un rappel en flexion d'au moins 83% déterminé par le test normalisé de rappel en flexion présenté dans la description; et dans chaque pièce (1) la force de traction qui, quand on l'applique suivant une diagonale quelconque d'une ouverture de treillis dans la pièce réduit la dimension diagonale opposée de moitié, est égale à au moins 60% au poids de la pièce (1) par mètre carré.

4. Procédé selon l'une quelconque des revendications précédentes, dans lequel la structure de treillis est une structure de treillis en matière plastique d'un seul tenant comprenant des torons (6) à orientation moléculaire.

5. Procédé selon l'une quelconque des revendications précédentes dans lequel les torons (6) du treillis ne sont pas circulaires et ont une dimension plus grande perpendiculairement au plan de la pièce (1) que la dimension dans le plan de la pièce (1).

6. Procédé selon l'une quelconque des revendications précédentes, dans lequel on prévoit au moins 10.000 pièces au moins par m³ de matrice.

7. Procédé selon l'une quelconque des revendications précédentes, dans lequel chaque pièce (1) ne contient pas plus de 1000 ouvertures complètes de treillis.

8. Procédé selon l'une quelconque des revendications précédentes, dans lequel la matrice (2) est le sol.

9. Procédé selon la revendication 8, dans lequel les pièces (1) représentent environ 2% ou moins de la matrice (2) (en poids sec).

10. Procédé selon la revendication 8, dans lequel les pièces (1) représentent environ 1% ou moins de la matrice (2) (en poids sec).

11. Procédé selon l'une quelconque des revendications 8 à 10, dans lequel les pièces (1) représentent environ 0,05% ou plus de la matrice (2) (en poids sec).

12. Procédé selon la revendication 11, dans lequel les pièces (1) représentent environ 0,2% ou plus de la matrice (2) (en poids sec).

13. Procédé selon l'une quelconque des revendications 1 à 7, dans lequel la matrice (2) contient un liant hydrocarboné.

14. Procédé selon l'une quelconque des revendications 1 à 7, dans lequel le matrice (2) contient un liant hydraulique ou pozzolanique.

15. Procédé selon la revendication 13 ou 14, dans lequel les pièces (1) représentent environ 5% ou moins de la matrice (2) (en poids sec).

16. Procédé selon la revendication 15, dans lequel les pièces (1) représentent environ 1% ou moins de la matrice (2) (en poids sec).

17. Procédé selon l'une quelconque des revendications précédentes, dans lequel la structure de treillis des pièces (1) est formée par deux séries de torons, les torons de chaque série s'étendant à peu près parallèlement les uns aux autres et les torons d'une série s'étendent à peu près perpendiculairement aux torons de l'autre série, en définissant ainsi des ouvertures de treillis à quatre côtés.

18. Matériau de renforcement quand on l'utilise dans le procédé selon la revendication 1 ou 3, comprenant un rouleau (14) en une structure de treillis flexible et ouvert pour fragmentation en pièces (1), caractérisé en ce que le rouleau (14) est sous forme d'une série de longs rubans étroits de la structure de treillis en des rouleaux coaxiaux et juxtaposés, les propriétés de chaque ruban étant telles que lorsqu'on

14

divise ce ruban en pièces, chacune comprend plus d'une ouverture complète de treillis et présente une superficie d'environ 20.000 mm², les pièces (1) étant telles que décrites dans la revendication 1 ou 3.

19. Machine de renforcement de sol destinée à se mouvoir sur le sol en cours de renforcement par le procédé de la revendication 8, caractérisée en ce que la machine comprend un support (13) portant une structure de treillis (14) définie dans la revendication 17, comporte des moyens (16, 18, 19) pour diviser la structure de treillis (14) en pièces (1) et comprend des moyens (22 ou 23, 24) pour placer les pièces (1) dans le sol.

FIG.1a.

FIG.1b.

FIG.Ic.

FIG.Id.

FIG.Ie.

0 122 995

FIG.2.

FIG.3.

FIG.4.

FIG.5.

3

FIG.6a

FIG.6b.

4

FIG 6c

FIG. 7.

FIG. 8.

FIG. 9.

6